# EUROPÄISCHE PATENTSCHRIFT

(11) **EP 2 545 200 B1**
(45) Veröffentlichungstag und Bekanntmachung des Hinweises auf die Patenterteilung: **25.05.2016**
(21) Anmeldenummer: 11701465.4
(22) Anmeldetag: 28.01.2011
(51) Int. Cl.: C23C 18/32

(54) **GLEITLAGERVERBUNDWERKSTOFF**
ANTIFRICTION COMPOSITE MATERIAL
MATERIAU COMPOSITE DE PALIER A GLISSEMENT

(30) Priorität: 12.03.2010 DE 102010011083
(43) Veröffentlichungstag der Anmeldung: 16.01.2013
(73) Patentinhaber: KS Gleitlager GmbH, 68789 St. Leon-Rot (DE)
(72) Erfinder: REINICKE, Rolf, 76669 Bad Schönborn (DE); SEREMETI, Megjit, 26871 Papenburg (DE)
(74) Vertreter: DREISS Patentanwälte PartG mbB
(86) Internationale Anmeldenummer: PCT/EP2011/000399
(87) Internationale Veröffentlichungsnummer: WO 2011/110258

(56) Entgegenhaltungen:
- WO-A1-2005/015037
- DE-A1- 19 728 777
- DE-B3-102004 047 423

## Beschreibung

Die Erfindung betrifft einen Gleitlagerverbundwerkstoff mit einer Trägerschicht, insbesondere aus Stahl, mit einer darauf aufgebrachten Schicht aus einem Lagermaterial, insbesondere auf Kupfer-Basis oder Aluminium-Basis, mit einer elektrisch, also galvanisch, oder chemisch, also stromlos (autokatalytisch) abgeschiedenen Zwischenschicht und mit einer auf der Zwischenschicht wiederum elektrisch oder chemisch abgeschiedenen Laufschicht.

Gleitlagerverbundwerkstoffe der vorstehend beschriebenen Art mit einer Zwischenschicht aus Nickel oder Zinn-Nickel sind bekannt, beispielsweise aus DE 36 01 439 C1, wo allerdings die Zwischenschicht und die Laufschicht durch Kathodenzerstäubung aufgebracht sind.

Zur Bereitstellung verschleißbeständiger Oberflächen wurde verschiedentlich der Vorschlag unterbreitet, auf der Oberseite eine Nickel oder nickelhaltige Beschichtung vorzusehen. Gemäß DE 10 2004 047 423 B3 wird eine Nickeldispersionsschicht mit darin dispergierten Teilchen, insbesondere PTFE, stromlos abgeschieden. Durch Angabe einer spezifischen Badzusammensetzung soll durch eine stromlose Abscheidung auch auf geometrisch komplexen Bauteilen ein gleichmäßiger Schichtaufbau erreicht werden, insbesondere bei Vergasergehäusen und Kraftstoffverteilern für Einspritzsysteme. Die stromlos abgeschiedene Nickeldispersionsschicht bildet dabei die die Oberfläche des Bauteils bildende Schicht.

Ausgehend von einem Gleitlagerverbundwerkstoff der eingangs erwähnten Art, insbesondere zur Herstellung von Lagerschalen oder Lagerbuchsen, insbesondere für motorische Anwendungen, wie Pleuellagerschalen, Pleuellagerbuchsen, Hauptlagerschalen, liegt der vorliegenden Erfindung die Aufgabe zugrunde, den Gleitlagerverbundwerkstoff im Hinblick auf typischerweise auftretende Probleme infolge fehlender Anpassungsfähigkeit und fehlender Partikelverträglichkeit zu verbessern.

Diese Aufgabe wird bei einem Gleitlagerverbundwerkstoff der genannten Art erfindungsgemäß dadurch gelöst, dass die Zwischenschicht eine Nickeldispersionsschicht mit darin dispergierten tribologisch wirksamen Bestandteilen ist und dass die tribologisch wirksamen Bestandteile Graphit, Molybdändisulfid (MOS₂), hexagonales Bornitrid oder PTFE umfassen.

Es wurde überraschenderweise festgestellt, dass durch Ausbildung der (bei bekannten Gleitlagerverbundwerkstoffen lediglich als Sperrschicht zwischen einer galvanischen Laufschicht und dem eigentlichen Lagerwerkstoff dienenden) nickelbasierten Schicht als Nickeldispersionsschicht mit darin dispergierten tribologisch wirksamen Partikeln im Zusammenwirken mit der Laufschicht eine wesentliche Verbesserung des Laufverhaltens der aus dem Gleitlagerverbundwerkstoff hergestellten Gleitlagerelemente erreicht werden kann. Dies wird darauf zurückgeführt, dass die Nickeldispersionsschicht im Betrieb des Gleitlagerverbundwerkstoffs bzw. des hieraus hergestellten Gleitlagers bei lokalem Abtrag der Laufschicht den dispergierten Bestandteil teilweise freisetzt, so dass er tribologisch aktiv wird. Insgesamt wird hierdurch die Fressneigung wesentlich verbessert.

Der Anteil der tribologisch wirksamen Bestandteile an der Nickeldispersionsschicht beträgt (8) 5 - 30 Gew.-%, insbesondere 10 - 30 Gew.-%, insbesondere 15 - 25 Gew.-%.

Das Lagermaterial ist vorzugsweise von einer CuSn-, CuZn-, CuAl- oder CuNi-Legierung oder von einer AlSn-, AlZn- oder AlSi-Legierung gebildet.

Die erwähnte galvanische Laufschicht umfasst typischerweise und bevorzugtermaßen Sn, SnCu, SnZn, Zn, Bismut, Silber, Indium, Antimon oder deren Legierungen.

Die Dicke der Nickeldispersionsschicht beträgt vorteilhafterweise 3 - 12 µm, insbesondere 3 - 10 µm, insbesondere 5 - 7 µm.

Die Dicke der die Oberfläche bildenden Laufschicht beträgt vorteilhafterweise 3 - 18 µm, insbesondere 3 - 12 µm, insbesondere 3 - 8 µm.

Gegenstand der Erfindung sind auch aus dem vorstehend beschriebenen Gleitlagerverbundwerkstoff hergestellte Gleitlagerelemente, insbesondere Gleitlagerschalen, Gleitlagerbuchsen und Anlaufscheiben, für motorische oder motorennahe Anwendungen.

Weitere Merkmale, Einzelheiten und Vorteile der Erfindung ergeben sich aus den beigefügten Patentansprüchen und aus der nachfolgenden Beschreibung einer bevorzugten Ausführungsform des erfindungsgemäßen Gleitlagerverbundwerkstoffs.

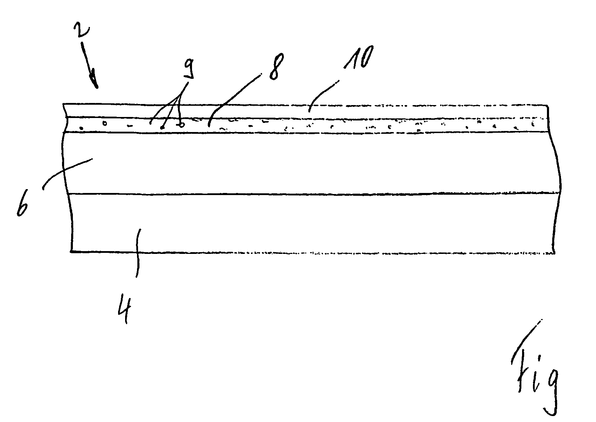

In der Zeichnung zeigt:
Die Figur eine schematische Schnittansicht durch einen erfindungsgemäßen Gleitlagerverbundwerkstoff.

Die Figur zeigt in schematischer Schnittansicht (nicht maßstabsgetreu) einen Gleitlagerverbundwerkstoff 2 gemäß der vorliegenden Erfindung. Der Gleitlagerverbundwerkstoff 2 umfasst eine Trägerschicht 4, vorzugsweise aus Stahl, und eine darauf aufgebrachte Schicht 6 aus einem Lagermaterial, insbesondere Bronze. Darauf ist eine Nickeldispersionsschicht 8, insbesondere mit dispergiertem PTFE 9 vorgesehen. Die Nickeldispersionsschicht 8 ist elektrisch oder chemisch, d. h. elektrolytisch/galvanisch oder stromlos, autokatalytisch, auf der Lagermaterialschicht 6 abgeschieden. Darauf ist wiederum elektrisch oder chemisch eine Laufschicht 10 insbesondere auf Zinn- oder Zinn-Kupfer-Basis einer bevorzugten Dicke von beispielsweise 6 µm abgeschieden.

Der Gleitlagerverbundwerkstoff bzw. ein hieraus hergestelltes Gleitlagerelement, insbesondere Gleitlagerschale oder Gleitlagerbuchse oder Anlaufscheibe, zeichnet sich durch eine gute Anpassungsfähigkeit und daher durch eine geringe Fressneigung, insbesondere während der Anlaufphase aus.

## Patentansprüche

1. Gleitlagerverbundwerkstoff (2) mit einer Trägerschicht (4), insbesondere aus Stahl, mit einer darauf aufgebrachten Schicht (6) aus einem Lagermaterial, insbesondere auf Kupfer-Basis oder Aluminium-Basis, mit einer elektrisch oder chemisch abgeschiedenen Zwischenschicht und mit einer auf der Zwischenschicht elektrisch oder chemisch abgeschiedenen Laufschicht (10), **dadurch gekennzeichnet, dass** die Zwischenschicht eine Nickeldispersionsschicht (8) mit darin dispergierten tribologisch wirksamen Bestandteilen (9) ist und dass die tribologisch wirksamen Bestandteile (9) Graphit, Molybdändisulfid (MOS₂), hexagonales Bornitrid oder PTFE umfassen.

2. Gleitlagerverbundwerkstoff nach Anspruch 1, **dadurch gekennzeichnet, dass** der Anteil der tribologisch wirksamen Bestandteile an der Nickeldispersionsschicht (8) 5 - 30 Gew.-%, insbesondere 10 - 30 Gew.-%, insbesondere 15 - 25 Gew.-% beträgt.

3. Gleitlagerverbundwerkstoff nach Anspruch 1 oder 2, **dadurch gekennzeichnet, dass** das Lagermaterial von einer CuSn-, CuZn-, CuAl- oder CuNi-Legierung oder von einer AlSn-, AlZn- oder AlSi-Legierung gebildet ist.

4. Gleitlagerverbundwerkstoff nach einem der vorstehenden Ansprüche, **dadurch gekennzeichnet, dass** die galvanische Laufschicht (10) Sn, SnCu, SnZn, Zn, Bismut, Silber, Indium, Antimon oder deren Legierungen umfasst.

5. Gleitlagerverbundwerkstoff nach einem der vorstehenden Ansprüche, **dadurch gekennzeichnet, dass** die Dicke der Nickeldispersionsschicht (8) 3 - 12 µm, insbesondere 3 - 10 µm, insbesondere 5 - 7 µm beträgt.

6. Gleitlagerverbundwerkstoff nach einem der vorstehenden Ansprüche, **dadurch gekennzeichnet, dass** die Dicke der Laufschicht 3 - 18 µm, insbesondere 3 - 12 µm, insbesondere 3 - 8 µm beträgt.

7. Gleitlagerelement für motorische oder motorennahe Anwendungen, insbesondere Gleitlagerschale oder -buchse oder Anlaufscheibe, hergestellt aus einem Gleitlagerverbundwerkstoff nach einem der vorstehenden Ansprüche.

## Claims

1. A slide bearing composite material (2) having a substrate layer (4), in particular of steel, having a layer (6) of a bearing material, in particular copper-based or aluminum-based, applied onto the substrate layer, having an electrically or chemically deposited intermediate layer, and having a sliding layer (10) deposited electrically or chemically onto the intermediate layer, **characterized in that** the intermediate layer is a nickel dispersion layer (8) with tribologically active ingredients (9) dispersed in it, and that the tribologically active ingredients (9) include graphite, molybdenum sulfide (MOS₂), hexagonal boron nitride, or PTFE.

2. The slide bearing composite material of claim 1, **characterized in that** the proportion of tribologically active ingredients in the nickel dispersion layer (8) amounts to from 5-30 weight %, in particular 10-30 weight %, in particular 15-25 weight %.

3. The slide bearing composite material of claim 1 or 2, **characterized in that** the bearing material is formed of a CuSn, CuZn, CuAl or CuNi alloy, or by an AlSn, AlZn or AlSi alloy.

4. The slide bearing composite material of one of the foregoing claims, **characterized in that** the electroplated sliding layer (10) includes Sn, SnCu, SnZn, Zn, bismuth, silver, indium, antimony, or alloys of these.

5. The slide bearing composite material of one of the foregoing claims, **characterized in that** the thickness of the nickel dispersion layer (8) is from 3-12 µm, in particular 3-10 µm, in particular 5-7 µm.

6. The slide bearing composite material of one of the foregoing claims, **characterized in that** the thickness of the sliding layer is from 3-18 µm, in particular 3-12 µm, in particular 3-8 µm.

7. A slide bearing element for applications in a motor or near a motor, in particular a slide bearing half liner or a slide bearing bushing or a thrust washer, produced from a slide bearing composite material of one of the foregoing claims.

## Revendications

1. Matériau composite pour palier lisse (2) comprenant une couche de base (4), en particulier en acier, une couche (6) en un matériau antifriction, en particulier à base de cuivre ou à base d'aluminium, qui est appliquée sur celle-ci, une couche intermédiaire déposée par voie électrique ou chimique ainsi qu'une couche de glissement (10) déposée par voie électrique ou chimique sur la couche intermédiaire, **caractérisé par le fait que** la couche intermédiaire est une couche de dispersion de nickel (8) ayant des composants (9) y dispersés et tribologiquement actifs et que les composants (9) tribologiquement actifs comprennent le graphite, le disulfure de molybdène (MoS₂), le nitrure de bore hexagonal ou le PTFE.

2. Matériau composite pour palier lisse selon la revendication 1, **caractérisé par le fait que** la proportion des composants tribologiquement actifs dans ladite couche de dispersion de nickel (8) est comprise entre 5 et 30 % en poids, en particulier entre 10 et 30 % en poids, en particulier entre 15 et 25 % en poids.

3. Matériau composite pour palier lisse selon la revendication 1 ou 2, **caractérisé par le fait que** le matériau antifriction est constitué par un alliage de CuSn, de CuZn, de CuAl ou de CuNi ou par un alliage d'AlSn, d'AlZn ou d'AlSi.

4. Matériau composite pour palier lisse selon l'une quelconque des revendications précédentes, **caractérisé par le fait que** la couche de glissement (10) galvanique comprend le Sn, le SnCu, le SnZn, le Zn, le bismuth, l'argent, l'indium, l'antimoine ou les alliages de ceux-ci.

5. Matériau composite pour palier lisse selon l'une quelconque des revendications précédentes, **caractérisé par le fait que** l'épaisseur de la couche de dispersion de nickel (8) est comprise entre 3 et 12 µm, en particulier entre 3 et 10 µm, en particulier entre 5 et 7 µm.

6. Matériau composite pour palier lisse selon l'une quelconque des revendications précédentes, **caractérisé par le fait que** l'épaisseur de la couche de glissement est comprise entre 3 et 18 µm, en particulier entre 3 et 12 µm, en particulier entre 3 et 8 µm.

7. Elément de palier lisse destiné à des applications pour moteurs ou liées aux moteurs, en particulier bague ou coussinet de palier lisse ou rondelle de friction, réalisé dans un matériau composite pour palier lisse selon l'une quelconque des revendications précédentes.
